(19) Europäisches Patentamt
European Patent Office
Office européen des brevets

(11) **EP 3 615 214 B1**

(12) **EUROPEAN PATENT SPECIFICATION**

(45) Date of publication and mention of the grant of the patent:
**23.10.2024 Bulletin 2024/43**

(21) Application number: **18724062.7**

(22) Date of filing: **25.04.2018**

(51) International Patent Classification (IPC):
***B01J 41/07*** *(2017.01)* ***B01J 41/20*** *(2006.01)*
***B01D 15/36*** *(2006.01)* ***A23L 2/78*** *(2006.01)*
***A23L 2/80*** *(2006.01)* ***C13B 20/14*** *(2011.01)*

(52) Cooperative Patent Classification (CPC):
**B01J 41/07; B01D 15/363; B01J 41/20; C13B 20/146**

(86) International application number:
**PCT/US2018/029278**

(87) International publication number:
**WO 2018/200619 (01.11.2018 Gazette 2018/44)**

(54) **FUNCTIONAL RESIN PARTICLES**

FUNKTIONELLE HARZTEILCHEN

PARTICULES DE RÉSINE FONCTIONNELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2017 US 201762491412 P**

(43) Date of publication of application:
**04.03.2020 Bulletin 2020/10**

(73) Proprietors:
- **DDP Specialty Electronic Materials US, LLC**
  **Wilmington, DE 19808 (US)**
- **DDP Specialty Electronic Materials US 8, LLC**
  **Collegeville, PA 19426 (US)**

(72) Inventors:
- **WANG, Hongzhi**
  **Collegeville, PA 19426 (US)**
- **PEASE, Stephen**
  **Collegeville, PA 19426 (US)**
- **MARTIN, Collin H.**
  **Collegeville, PA 19426 (US)**
- **GISCH, Daryl J.**
  **Midland, MI 47674 (US)**
- **DEAR, Joshua**
  **Collegeville, PA 19426 (US)**
- **SLOMINSKI, Martin**
  **Midland, MI 48667 (US)**
- **TEGEN, Marvin H.**
  **Midland, MI 48667 (US)**
- **ROHANNA, John C.**
  **Collegeville, PA 19426 (US)**
- **COLLIN, Jennifer Reichl**
  **Collegeville, PA 19426 (US)**

(74) Representative: **Houghton, Mark Phillip**
**Patent Outsourcing Limited**
**1 King Street**
**Bakewell, Derbyshire DE45 1DZ (GB)**

(56) References cited:
**EP-A1- 0 481 603**

- **DARYL J GISCH ET AL: "Methylene bridged resins yield enhanced osmotic stability in contacting with organic acid streams", J. SEP. SCI., 1 January 2001 (2001-01-01), pages 477 - 478, XP055483409, Retrieved from the Internet <URL:https://onlinelibrary.wiley.com/doi/pdf/10.1002/1615-9314(20010601)24:6<477::AID-JSSC477>3.0.CO;2-I> [retrieved on 20180612]**
- **G. LESLIE BURNETT ET AL: "Determination of methylene bridge crosslinking in chloromethylated PS-DVB resins", JOURNAL OF POLYMER SCIENCE, PART A: POLYMER CHEMISTRY, vol. 54, no. 13, 3 February 2016 (2016-02-03), pages 1955 - 1960, XP055487437, ISSN: 0887-624X, DOI: 10.1002/pola.28054**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 615 214 B1

## Description

In processes for refining sugars, it is often desired to treat aqueous solutions that contain one or more monosaccharides in order to remove substances that impart color. One way to remove color is to pass the aqueous solution through a bed of adsorbent particles, allowing the colored substances to become adsorbed onto the particles. When such a method is used, it is desirable that the adsorbent particles can subsequently be regenerated; that is, most or all of the adsorbed colored substances can be removed from the adsorbent particles. It is desirable that, after regeneration, the adsorbent particles can be re-used for removing colored substances. It is also desired that the adsorbent particles show good osmotic stability.

US 6,942,805 describes a process for decolorizing sugar juices by means of monodisperse ion exchangers, preferably anion exchangers, and the use of the same for sugar juice decolorization.

EP-A-0481603 discloses a process for separating low molecular weight weak organic acids from liquid mixtures using ion exchange resins, which may be used to purify, for example, sugar solutions used in preparing foodstuffs.

It is desired to provide a specific class of resin particles with specific characteristics that result in the resin particles effectively decolorizing sugar solutions, especially those solutions containing one or more monosaccharides, and that result in the resin particles having one or more of the following improvements: being able to be more completely regenerated after adsorbing colored substances, and/or having improved osmotic stability.

The following is a statement of the invention.

The present invention provides a collection of resin particles,

wherein the resin particles comprise one or more vinyl aromatic polymers, and the total weight of polymerized units of all vinyl aromatic monomers is 90% or more by weight of the polymer;
wherein the polymer comprises methylene bridge groups between aromatic rings;
wherein the polymer comprises amino groups and the total amount of amino groups bonded to the resin particles is 0.1 to 1.4 equivalents per liter of the collection of resin particles;
wherein quaternary ammonium groups bonded to the polymer are either absent or else are present in an amount of 0.05 equivalents or less per liter of the collection of resin particles;
wherein the resin particles have water retention capacity of 40% to 50% by weight of water based on the weight of the collection of resin particles;
and wherein the resin particles have surface area of from 10 to 100 $m^2/g$, using the Brunauer-Emmett-Teller (BET) method using nitrogen gas.

Also described is a process for treating an aqueous solution,

wherein the aqueous solution comprises dissolved sugar solids in an amount of 10% to 50% by weight based on the weight of the aqueous solution;
wherein the dissolved sugar solids contain monosaccharides in an amount of 1% to 99% by weight based on the weight of the dissolved sugar solids;
wherein the aqueous solution has ionic conductivity of 100 to 10,000 $\mu$S/cm and color content of 100 to 10,000 international color units;
wherein the process comprises bringing the aqueous solution into contact with a collection of resin particles as hereinbefore defined.

The following is a detailed description of the invention.

As used herein, the following terms have the designated definitions, unless the context clearly indicates otherwise.

As used herein, "dissolved sugar solids" refers to all dissolved compounds that are monosaccharides, disaccharides, oligosaccharides, or polysaccharides. A monosaccharide is a saccharide compound that cannot be hydrolyzed to a simpler saccharide compound. Monosaccharides include trioses, tetroses, pentoses, hexoses, and heptoses. A disaccharide is a molecule formed when two monosaccharides are joined by a glycosidic linkage. An oligosaccharide is a molecule formed when three to ten monosaccharides are joined by glycosidic linkages. A polysaccharide is a molecule formed when eleven or more monosaccharides are joined by glycosidic linkages.

"Resin" as used herein is a synonym for "polymer." A "polymer," as used herein is a relatively large molecule made up of the reaction products of smaller chemical repeat units. Polymers may have structures that are linear, branched, star shaped, looped, hyperbranched, crosslinked, or a combination thereof; polymers may have a single type of repeat unit ("homopolymers") or they may have more than one type of repeat unit ("copolymers"). Copolymers may have the various types of repeat units arranged randomly, in sequence, in blocks, in other arrangements, or in any mixture or combination thereof. Polymers have weight-average molecular weights of 2,000 or more.

Molecules that can react with each other to form the repeat units of a polymer are known herein as "monomers." The repeat units so formed are known herein as "polymerized units" of the monomer.

Vinyl monomers have a non-aromatic carbon-carbon double bond that is capable of participating in a free-radical polymerization process. Vinyl monomers have molecular weights of less than 2,000. Vinyl monomers include, for example, styrene, substituted styrenes, dienes, ethylene, ethylene derivatives, and mixtures thereof. Ethylene derivatives include, for example, unsubstituted and substituted versions of the following: vinyl acetate and acrylic monomers. "Substituted" means having at least one attached chemical group such as, for example, alkyl group, alkenyl group, vinyl group, hydroxyl group, alkoxy group, hydroxyalkyl group, carboxylic acid group, sulfonic acid group, amino group, quaternary ammonium group, other functional groups, and combinations thereof.

Monofunctional vinyl monomers have exactly one polymerizable carbon-carbon double bond per molecule. Multifunctional vinyl monomers have two or more polymerizable carbon-carbon double bonds per molecule.

As used herein, vinyl aromatic monomers are vinyl monomers that contain one or more aromatic ring.

Vinyl monomers are considered to form polymers through a process of vinyl polymerization, in which the carbon-carbon double bonds react with each other to form a polymer chain.

A polymer in which 90% or more of the polymerized units, by weight based on the weight of the polymer, are polymerized units of one or more vinyl monomers is a vinyl polymer. A vinyl aromatic polymer is a polymer in which 50% or more of the polymerized units, by weight based on the weight of the polymer, are polymerized units of one or more vinyl aromatic monomer. A vinyl aromatic polymer that has been subjected to one or more chemical reactions that result one or more substituent groups (such as, for example, an amino group or a methylene bridge group) being attached to the vinyl aromatic polymer is still considered herein to be a vinyl aromatic polymer. A polymerized unit of a vinyl aromatic monomer that has been subjected, after polymerization, to one or more chemical reactions that result one or more substituent groups (such as, for example, an amino group or a methylene bridge group) being attached to the polymerized unit of the vinyl aromatic monomer is still considered herein to be a polymerized unit of a vinyl aromatic monomer.

A resin is considered herein to be crosslinked if the polymer chain has sufficient branch points to render the polymer not soluble in any solvent. When it is said herein that a polymer is not soluble in a solvent, it means that less than 0.1 gram of the resin will dissolve in 100 grams of the solvent at 25°C.

As used herein, the term "amino group" refers to either a primary amino group, a secondary amino group, a tertiary amino group, or a quaternary ammonium group. A "non-quaternary amino group" is either a primary amino group, a secondary amino group, or a tertiary amino group, but is not a quaternary ammonium group.

A resin is considered to contain an amino group when the nitrogen atom of the amino group is either directly or indirectly covalently bound to the resin. That is, the nitrogen atom of the amino group may be covalently bound directly to an atom in the main chain of the polymer, or the nitrogen atom of the amino group may be covalently bound to an intermediate chemical group that is, in turn, covalently bound to an atom in the main chain of the polymer. Non-quaternary amino groups have the structure $-NR^1R^2$, or the structure $-N^+HR^1R^2$, where the open bond connects directly or indirectly to an atom on the main chain of the polymer; where each of $R^1$ and $R^2$ is independently hydrogen or a substituted or unsubstituted alkyl group. Neither $R^1$ nor $R^2$ is directly or indirectly bonded to an atom in the main chain of the polymer except through the nitrogen atom of the amino group via the open bond shown in the structure above.

A resin is considered herein to contain a quaternary ammonium group when the nitrogen atom of the quaternary ammonium group is either directly or indirectly covalently bound to the resin. A quaternary ammonium group has the structure $-N^+R^1R^2R^3$, where the open bond connects directly or indirectly to an atom on the main chain of the polymer; where each of $R^1$, $R^2$ , and $R^3$ is independently a substituted or unsubstituted hydrocarbyl group. Each of $R^1$, $R^2$, and $R^3$ independently may or may not be directly or indirectly bonded to an atom in the main chain of the polymer through a set of covalent bonds that does not include the nitrogen atom of the amino group.

A methylene group is the divalent chemical group $-CH_2-$. A methylene group is considered herein to be a methylene bridge group between two aromatic rings when the carbon atom of the methylene group is bonded to a carbon atom of an aromatic ring and is also bonded to a carbon atom of a different aromatic ring. A methylene bridge group is the $-CH_2-$ group shown in the following structure (I):

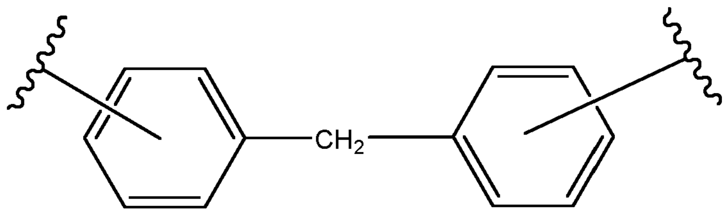
(I)

The water retention capacity of a collection of resin particles refers to the water content of the collection of resin particles. The water retention capacity is expressed as a percentage by weight of water, based on the total weight of

the collection of resin particles, where the total includes both the resin particles and the water.

A collection of resin particles may be characterized by the diameters of the particles. A particle that is not spherical is considered to have a diameter equal to the diameter of a sphere having the same volume as the particle. A useful characterization of a collection of resin particles is D60, which is a diameter having the following property: 60% by volume of the resin particles have diameter below D60, and 40% by volume of the resin particles have diameter of D60 or above. Similarly, 10% of the resin particles by volume have diameter below D10, and 90% of the resin particles by volume have diameter of D10 or above. The uniformity coefficient (UC) is found by dividing D60 by D10. The harmonic mean diameter (HMD) is defined by the following equation:

$$HMD = \frac{n}{\sum_{i=1}^{N}\left(\frac{1}{d_i}\right)}$$

where i is an index over the individual particles; $d_i$ is the diameter of each individual particle; and N is the total number of particles.

The Water Retention Capacity (WRC) of a collection of resin particles is a measure of the water molecules that adhere to the resin particles when bulk liquid water has been removed. WRC is measured by removing bulk liquid water from the collection of resin particles and allowing the collection of resin particles to come to equilibrium at room temperature (approximately 23°C) with air having 100% humidity to produce dewatered moist resin. The dewatered moist resin is weighed, dried, and weighed again. WRC is the weight loss divided by the initial weight, expressed as a percentage.

The surface area of a collection of resin particles is found using the Brunauer-Emmett-Teller (BET) method using nitrogen gas. The BET method with nitrogen gas is also used for characterizing the total pore volume and the average pore diameter of the collection of resin particles.

Ratios presented herein are characterized as follows. For example, if a ratio is said to be 3:1 or greater, that ratio may be 3:1 or 5:1 or 100:1 but may not be 2:1. This characterization may be stated in general terms as follows. When a ratio is said herein to be X:1 or greater, it is meant that the ratio is Y:1, where Y is greater than or equal to X. For another example, if a ratio is said to be 15:1 or less, that ratio may be 15:1 or 10:1 or 0.1:1 but may not be 20:1. In general terms, when a ratio is said herein to be W:1 or less, it is meant that the ratio is Z:1, where Z is less than or equal to W.

The resin particles of the present invention comprise one or more vinyl aromatic polymers. The total weight of polymerized units of all vinyl aromatic monomers is, by weight of the polymer, 90% or more; preferably 95% or more.

Preferred vinyl aromatic monomers are styrene, alkyl styrenes, and multifunctional vinyl aromatic monomers. Among alkyl styrenes, preferred are those in which the alkyl group has 1 to 4 carbon atoms; more preferred is ethylvinylbenzene. Among multifunctional vinyl aromatic monomers, preferred is divinylbenzene. Preferably the polymer contains polymerized units of multifunctional vinyl aromatic monomer in as amount, by weight based on the weight of polymer, of 0.5% or more; more preferably 1% or more. Preferably the polymer contains polymerized units of multifunctional vinyl aromatic monomer in as amount, by weight based on the weight of polymer, of 10% or less; more preferably 8% or less.

Preferably, the polymer in the resin particles is crosslinked.

The collection of resin particles of the present invention contains both resin particles and water. Preferably the sum of the weight of resin particles plus the weight of the water, as a percentage based on the total weight of the collection of resin particles (which includes the resin particles, water, and optionally other ingredients), is 80% or more; more preferably 90% or more; more preferably 95% or more; more preferably 98% or more.

The polymer in the resin particles contain methylene bridge groups. The amount of methylene bridge groups is characterized by the weight of methylene bridge groups as a percentage of the weight of the polymer. The amount of methylene bridge groups is greater than zero. Preferably the amount of methylene bridge groups is 4% or less.

The polymer in the resin particles has amino groups. More preferably, the polymer in the resin particles have amino groups that are secondary or tertiary. Preferably both $R^1$ and $R^2$ (as defined above) are unsubstituted alkyl groups. Preferably each of $R^1$ and $R^2$ independently has 1 to 4 carbon atoms; more preferably 1 to 2 carbon atoms. Preferably $R^1$ and $R^2$ are the same as each other.

The total amount of all types of amino groups can be characterized by the equivalents of amino groups per liter of the collection of resin particles (eq/L). The polymer has amino groups in the amount of 0.1 eq/L or more; more preferably 0.4 eq/L or more; more preferably 0.7 eq/L or more; more preferably 1 eq/L or more; more preferably 1.2 eq/L or more. The polymer has total amino groups in the amount of 1.4 eq/L or less.

The polymer has quaternary ammonium groups in an amount, as equivalents per liter of the collection of resin particles, 0.05 eq/L or lower; preferably 0.025 eq/L or less; more preferably 0.015 eq/L or less.

Preferably, the polymer either has no groups that contain any atom other than carbon, hydrogen, and nitrogen or else has a total amount of groups that contain one or more atoms other than carbon, hydrogen, and nitrogen of 0.01 equivalents per liter of the collection of resin particles (eq/L) or less; more preferably 0.005 eq/L or less; more preferably

0.002 eq/L or less.

The resin particles of the present invention have water retention capacity of 40% or more. The resin particles of the present invention preferably have water retention capacity of 50% or less; more preferably 47% or less; more preferably 44% or less.

The particles of the present invention have a surface area of 100 $m^2/g$ or less; more preferably 50 $m^2/g$ or less. The particles of the present invention have a surface area of 10 $m^2/g$ or more; more preferably 20 $m^2/g$ or more.

Preferably the collection of resin particles has harmonic mean diameter of 200 micrometers to 1,000 micrometers. Preferably the collection of resin particles has uniformity coefficient of 1.5 or lower; more preferably 1.3 or lower; more preferably less than 1.1.

The average pore diameter of the collection of resin particles is preferably 50 nm or smaller; more preferably 40 nm or smaller; more preferably 35 nm or smaller; more preferably 32 nm or smaller. The average pore diameter of the collection of resin particles is preferably 20 nm or larger; more preferably 25 nm or larger; more preferably 28 nm or larger; more preferably 30 nm or larger.

The collection of resin particles may be made by any method. A preferred method of making the collection of resin particles is to first make a collection of polymer particles, using aqueous suspension polymerization of a monomer mixture. Preferably the monomer mixture contains one or more vinyl aromatic monomer. Preferably the vinyl aromatic monomers are hydrocarbons. More preferably, all monomers are hydrocarbons.

Preferably the monomer mixture also contains one or more porogen. A porogen is a compound that is liquid at 23°C and that is soluble in the monomer mixture, in the amounts used, at all temperatures between 23°C and the temperature of polymerization. A porogen does not effectively swell the polymer formed during polymerization but instead forms pockets of porogen within a matrix of the polymer. After polymerization, the porogen is removed, leaving pores in the polymer particle.

Preferably, after the polymerization, amine functional groups are added by a two-step process of halomethylation followed by amination.

Halomethylation may be accomplished, for example, by reacting the polymer with a halomethylating agent such as, for example, methylchloromethyl ether. It is considered that, during the halomethylation step, the predominant reaction is attaching a halomethyl group (such as, for example, a chloromethyl group) to a carbon atom on in aromatic ring. It is also considered that, during halomethylation, a side reaction also occurs, in which methylene bridge groups (as described above in structure (I)) are formed that connect aromatic rings of the polymer to each other.

Amination of the halomethylated polymer may be accomplished, for example, by reacting the polymer with an amination agent such as, for example, dimethylamine. It is considered that the predominant reaction during the amination process is the conversion of halomethyl groups to amino groups, such as, for example, the conversion of chloromethyl groups to dimethylaminomethyl groups. It is also considered that, during amination, a side reaction occurs in which two halomethyl groups become linked to each other through a quaternary ammonium group, resulting in a structure like, for example, the following:

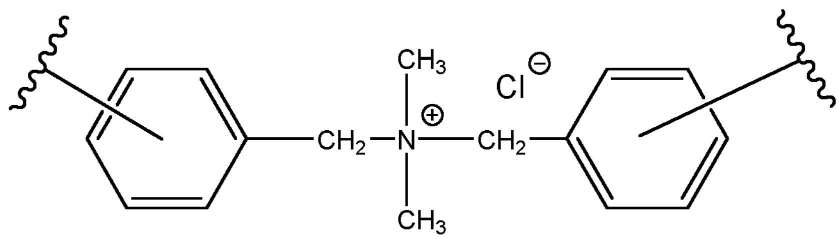

It is contemplated that proper control of the halomethylation and amination processes can control the extent to which the side reactions occur and thereby impart the features that characterize the collection of resin particles of the present invention.

In making the collection of resin particles of the present invention, it is preferred that the chloromethylated polymer is not subjected to a Friedel-Crafts chemical reaction. A Friedel-Crafts reaction involves reacting the polymer in the presence of a solvent, such as, for example, ethylene dichloride, in the presence of a Friedel-Crafts catalyst such as, for example, $FeCl_3$. The Friedel-Crafts reaction causes the carbon atom in the $-CH_2Cl$ group of a benzyl chloride group to become un-bonded from the chlorine atom and to become bonded to an aromatic carbon atom located on a new aromatic ring, thus forming a methylene bridge.

The collection of resin particles of the present invention may be used for any purpose. A preferred purpose is the purification of aqueous solutions that contain one or more monosaccharides.

The aqueous solution may be obtained from any source. Some suitable sources include high fructose corn syrup process streams, cane or beet sugar process streams, fermentation broths, starch streams or extracts, and

cellulosic hydrolysates. Preferred are high fructose corn syrup process streams and cane or beet sugar process streams; more preferred are high fructose corn syrup streams. In cane or beet sugar process streams, preferably the aqueous solution is obtained by a process that includes mechanical operations on the beet or cane (such as one or more of milling, slicing, pressing, or a combination thereof); formation of a mixture of water with the cane or beet or with the product of the mechanical process; and optional filtration of that mixture. In high fructose corn syrup processes, preferably the aqueous solution is obtained by a process that includes milling the corn to extract starch; formation of a mixture of water with the corn or the product of the milling; addition of acid and/or enzymes to that mixture to break the starch down in to shorter-length saccharides; and filtration of the mixture.

Preferably the amount of dissolved sugar solids in the aqueous solution is, by weight based on the weight of the aqueous solution, 10% or higher; more preferably 20% or higher; more preferably 25% or higher. Preferably the amount of dissolved sugar solids in the aqueous solution is, by weight based on the weight of the aqueous solution, 70% or less; more preferably 50% or less; more preferably 40% or less.

Preferably the total amount of all monosaccharides is, by weight based on the weight of the dissolved sugar solids, 1% or higher; more preferably 5% or higher; more preferably 20% or higher; more preferably 90% or higher; more preferably 92% or higher. Preferably the monosaccharides contain glucose, fructose, or a mixture thereof; more preferably the monosaccharides contain glucose. Preferably the amount of glucose is, by weight based on the total weight of all the monosaccharides, 50% or higher; more preferably 70% or higher; more preferably 92% or higher.

Preferably, the sum of the amount of water plus the amount of dissolved sugar solids is, by weight based on the weight of the aqueous solution, 50% or higher; more preferably 70% or higher; more preferably 90% or higher; more preferably 95% or higher.

The aqueous solution preferably has conductivity of 100 $\mu$S/cm or higher; more preferably 200 $\mu$S/cm or higher. The aqueous solution preferably has conductivity of 10,000 $\mu$S/cm or lower; more preferably 5,000 $\mu$S/cm or lower.

The aqueous solution has color content of 100 international color units (ICU, as defined by the International Commission for Uniform Methods of Sugar Analysis (ICUMSA)) or more. Preferably, the aqueous solution has color content of 10,000 ICU or lower; more preferably 5,000 ICU or lower; more preferably 2,000 ICU or lower.

The aqueous solution may be brought into contact with the collection of resin particles of the present invention by any method. Preferably, after the aqueous solution has been brought into contact with collection of resin particles, the solution is then separated from the collection of resin particles. It is contemplated that, after the separation, some substances that imparted color to the original aqueous solution will remain on the collection of resin particles, and the color content of the aqueous solution will be significantly reduced.

A preferred method is to pass the aqueous solution through a fixed bed of the collection of resin particles. The fixed bed is held in a container that holds the collection of resin particles in place while allowing the aqueous solution to enter through an inlet, to make contact with the collection of resin particles, and to exit through an outlet. A suitable container is a chromatography column.

After the aqueous solution has been in contact with the collection of resin particles and then separated from the collection of resin particles, the aqueous solution is herein referred to as "treated." The treated aqueous solution may be used for any purpose. Preferably the treated aqueous solution subjected to one or more of the following operations: contact with activated carbon; contact with one or more cation-exchange medium; contact with one or more anion-exchange medium in addition to the collection of resin particles of the present invention; or a combination thereof.

If the aqueous solution was produced as part of a beet or cane sugar process stream, the treated aqueous solution is preferably subjected to one of more of the following operations: crystallization of the sugar in the solution; contact with one or more cation-exchange medium; contact with one or more anion-exchange medium in addition to the collection of resin particles of the present invention; contact with a chromatography resin; or a combination thereof.

If the aqueous solution was produced as part of a high fructose corn syrup production process, the treated aqueous solution is preferably subjected to one of more of the following operations: contact with one or more cation-exchange medium; contact with one or more anion-exchange medium in addition to the collection of resin particles of the present invention; isomerization to convert some or all of the glucose into fructose; contact with a chromatography resin to produce separate glucose-rich and fructose-rich solutions; or a combination thereof.

The following are examples of the present invention. Operations were performed at room temperature (approximately 23°C) except where otherwise stated.

The following eight commercially available comparative resins were tested. "x" means "not tested."

Table 1: Commercially Available Comparative Resins

| Resin | | amino(1) (eq/L) | quat(2) (eq/L) | water(3) (%) | UC(4) | area(5) ($m^2/g$) | pore(6) (nm) |
|---|---|---|---|---|---|---|---|
| DOWEX™ 66 | Dow Chemical Co. | 1.64 | 0.22 | 44.1 | > 1.3 | 51.1 | 33.7 |
| DOWEX™ MONOSPHERE™ 66 | Dow Chemical Co. | 1.55 | 0.23 | 43.9 | < 1.1 | 54.6 | 26.5 |
| DOWEX™ MONOSPHERE™ 77 | Dow Chemical Co. | 1.70 | 0.23 | 42.7 | <1.1 | 55.2 | 28.7 |
| Resin I | - | 1.27 | 0.17 | 54.7 | <1.1 | 54.4 | 23.4 |
| AMBERLITE™ IRA96 | Dow Chemical Co. | 1.10 | 0.18 | 62.7 | > 1.3 | x | x |
| DIANON™ WA30 | Mitsubishi | 1.41 | 0.27 | 50.5 | > 1.3 | 20.8 | 34.9 |
| LEWATIT™ 4528 | Lanxess | 1.75 | 0.00 | 45.9 | > 1.3 | 33.2 | 44.2 |
| LEWATIT™ 4428 | Lanxess | 1.61 | 0.05 | 51.9 | > 1.3 | 41.3 | 38.2 |

(1) total concentration of all amino groups in equivalents per liter of resin particles
(2) concentration of quaternary ammonium groups in equivalents per liter of resin particles
(3) water retention capacity, weight % of water based on total weight of collection of resin particles
(4)

$$UC = D60/D10$$

(5) surface area by BET method
(6) average pore diameter by BET method

Water retention capacity was measured as follows. In brief, excess water was removed from the resin under humid air to produce resin that is dewatered but damp. The damp resin is weighed, dried, and weighed again. The relative weight loss upon drying is the water retention capacity. In detail, 50 mL of the collection of resin particles was mixed with 50 mL of deionized (DI) water. The mixture was placed in a Buchner funnel on a vacuum flask, and water was allowed to drain from the sample under gravity. The sample was covered with a rubber stopper that was connected to a hose that supplies air having 100% relative humidity from a humidifying tower. Vacuum was applied to the vacuum flask to provide air flow of 4.0 L/min for 5 minutes. The result is dewatered damp resin. Then 4 to 5 grams of resin was weighed (Wm), then dried in an oven at 105°C for 18 hours, then weighed again (Wd). Water Retention Capacity (WRC) was given by

$$WRC\ (\%) = 100 * (Wm - Wd) / Wm$$

Amino groups per liter and Quaternary Ammonium groups per liter were determined as follows. In brief, the resin was converted to chloride form, the chloride was removed by elution with aqueous solution of $NO_3$, and the quantity of chloride in the eluted fluid gave the "total exchange capacity" ( TEC, the sum of amino groups per liter and quaternary ammonium groups per liter). Then the resin was again converted to chloride form using basic NaCl, then the chloride was removed by elution with aqueous solution of $NO_3$, and the quantity of chloride in the eluted fluid gave the quaternary ammonium groups per liter (also called "strong base capacity," SBC). Then the amino groups per liter (also called the "weak base capacity", WBC) was found by WBC = TEC - SBC.

In detail, dewatered damp resin was prepared as in the test for Water Retention Capacity. Approximately 15 g of resin was weighed (Wm), and then mixed with water to make a total volume of 25 mL. The resin was allowed to settle, and the volume of the resin was recorded (Vm). The resin was transferred to a fritted glass filter tube and then treated with 1 L of 1.0 N HCl in water at 25 mL/min followed by 1 L of alcohol mixture (5/95 methanol/ethanol by volume) at 25 mL/min. Then 1 L of .0.5 N $NaNO_3$ in water was passed through the sample at 25 mL/min and collected and saved as solution "A." Then the following were passed through the sample: 1 L of 1.0 N NaOH in water at 25 mL/min; 1 L of DI water at 25 mL/min; 1 L of 1.0 N NaCl at 25 mL/min; 1 L of DI water at 25 mL/min. Then 1 L of .0.5 N $NaNO_3$ in water

was passed through the sample at 25 mL/min and collected and saved as solution "B." Solution A was adjusted to pH 4 using either 1 N $HNO_3$ in water or 1 N NaOH in water. Then Solution A was titrated for chloride with 0.1 N AgNOs, using a Mettler Toledo™ autotitrator, model T90, until an inflection point in conductivity was observed. The titration volume was Va (mL) and the normality of the AgNOs solution was Nag (eq/L). Solution B was pH-adjusted and titrated in the same way, to find titration volume Vb (mL). Then the same $NaNO_3$ solution was pH-adjusted and titrated in the same way to find titration volume Vblank (mL).

$$\text{TEC} = 10 * (\text{Va} - \text{Vblank}) * \text{Na} / \text{Vm}$$

$$\text{SBC} = 10 * (\text{Vb} - \text{Vblank}) * \text{Na} / \text{Vm}$$
$$= \text{equivalents of quaternary ammonium groups per liter of resin}$$

$$\text{WBC} = \text{TEC} - \text{SBC} = \text{equivalents of amino groups per liter of resin}$$

Conductivity was measured with an Orion™ model 162A conductivity meter, from Thermo Scientific.
Brix was measured using an AR 200 refractometer (from Reichert, Inc.), calibrated in Brix units.
Color content was measured using a Genesys™ 10S UV-vis spectrophotometer, from Thermo Scientific, using a cell having 1 cm path length. Color content is reported as described by the International Commission for Uniform Methods of Sugar Analysis (ICUMSA), where

ICU = 1000 ∗ (Absorbance at 420 nm) / [ (path length) ∗ (sugar concentration) ] sugar concentration = Brix / [ 100∗ (density in g/$cm_3$) ]

The ICUMSA number calculated above is reported as ICU, for international color units.
The aqueous solution was prepared as follows. High fructose corn syrup (HFCS) was used in which 42% by weight of the dissolved sugar solids were fructose and approximately 55% by weight of the dissolved sugar solids were glucose. The HFCS was heated at pH 1 at 80°C for 4 to 5 hours and then neutralized with aqueous solution of NaOH to pH 3 to 4. The aqueous solution had the following properties. "Cond" is conductivity.

| Brix | Color (ICU) | pH | density (g/$cm^3$) | absorbance at 420 nm | Cond (uS/cm) |
|---|---|---|---|---|---|
| 30 | 1000 to 1300 | 3.5 to 4.5 | 1.13 | 0.3 to 0.4 | 400 to 1200 |

It is contemplated that results obtained using this aqueous solution would be similar to results that would be obtained if the aqueous solution contained a higher proportion of glucose (for example, 90% by weight or higher of the dissolved sugar solids). For example, if the aqueous solution were obtained from a high fructose corn syrup process stream (instead of from the laboratory procedure described above), it is expected that the aqueous solution could have a relatively high proportion of glucose and could have relatively little fructose. It is expected that performing the method of the present invention using an aqueous solution obtained from a high fructose corn syrup process stream would yield similar benefits to the benefits reported herein that were obtained by using the aqueous solution made in the laboratory procedure described above.
Color removal was performed as follows. 30 mL of resin particles were packed into a chromatography column of inside diameter 15 mm and length 300 mm. The quaternary amine groups in the functionalized resin were converted to hydroxide form by stirring the resin with three resin volumes' worth of a four weight percent solution of sodium hydroxide in water at room temperature. This process was repeated a total of three times, after which the resin was thoroughly washed in deionized water to remove excess sodium hydroxide. The column, the resin particles, and the aqueous solution were heated to 60°C, and the aqueous solution was passed through the column at 3 bed volumes (BV) per hour. To assess color removal, the ICUMSA color was measured in the aqueous solution before entering the column and again after exiting the column. Color removal is reported as "decolorization":

$$\text{decolorization} = (\text{CA} - \text{CB}) / \text{CA}$$

where CA is the ICUMSA color before entering the column and CB is the ICUMSA color after exiting the column. Decolorization was measured at 50 BV.

Regeneration was performed as follows. After passage of the aqueous solution was stopped, 3 BV at a rate of 3 BV/hr of an aqueous solution of 1 weight% NaOH was passed through the column at 60°C, followed by 3 BV of deionized water at 3 BV/hr at 60°C. All of the NaOH solution and the deionized water was collected after passage through the column and combined. The absorbance at 420 nm of that combined solution is reported.

Osmotic stability was tested as follows. Three BV of a solution of 20 weight% lactic acid in water was passed through a resin bed containing 4 mL of resin particles at a flow rate of 1.0 mL/min for 12 minutes, followed by rinsing the resin in the column with 4 BV of deionized (DI) water at a flow rate of 1.0 mL/min over 15 minutes. Then, 3 BV of a solution of 4 weight% sodium hydroxide in water was passed through the resin at a flow rate of 1.0 mL/min for 12 minutes, followed by rinsing with 4 BV of DI water for 15 minutes. This cycle was repeated 23 additional times giving a total of 24 cycles. After 24 cycles were completed, the sample of each resin was collected, and a photomicrograph of the beads was taken and inspected to count the whole beads. Osmotic strength is reported as the percentage of particles that remain whole, based on the total number of particles. The higher percentage of whole beads represents higher osmotic strength.

Preparative Example 1: Synthesis of resin particles

Copolymer particles were obtained. The copolymer was a copolymer of styrene, ethylvinylbenzene, and divinylbenzene, made in aqueous suspension polymerization from a suspension of droplets that contained the mixture of monomers, initiator, and porogen. The mixture of monomers contained more than 90% styrene by weight based on the total weight of all monomers. The droplets contained between 20% and 60% porogen by weight based on the weight of the droplets. The copolymer is suitable for use in standard industrial techniques that produce either previously-known weak base ion exchange resins or previously-known strong base ion exchange resins.

The copolymer was chloromethylated as follows. 60 g of the copolymer was added to 350 mL chloromethyl methyl ether and swelled for 30 min. under agitation. 3.6 grams of catalyst $FeCl_3$ was added, and the heating profile was started. The heating temperature (jacket temperature) was set at 70°C. The boiling temperature of the mixture was about 50 to 60°C, so the reaction was held through within this temperature window under reflux for 20 min to 45 mins, depending on the sample. Since chloromethyl ether is boiled out, additional 50 ml to 200 ml chloromethyl ether was often added to keep the fluidity during the reaction. After the holding time, the heating was stopped, and methanol was added to quench the reaction, and the agitation was continued for 15 min. The reactor was cooled to room temperature (approximately 23°C), and the solution was siphoned out of the reactor. The resin was washed with solvent in a sequence of methanol, methylal, and methanol to removal residue ether. Methanol was siphoned out, and methylal was added to swell the beads for 30 min. Methylal was siphoned out, and the chloromethylated copolymer was ready for amination.

The chloromethylated copolymer was aminated as follows. 150 mL chloromethylated beads was added to a mixture solution containing 58 g of 50 weight% NaOH in water and 60 g of 40 weight% Dimethylamine (DMA) in water (weight ratio of amine/copolymer was between 0.5 and 0.6). The reaction was held at 100°C was approximately 2 hours under reflux. When reaction was completed, the solution was siphoned out. The resin was washed with DI water for 3 times, followed by 2N HCl solution in water, washed for 30 mins to removal all residual amine. HCl was siphoned off, and the resin was backwashed with DI water until effluent was neutral (pH approximately 7).

The following resins were made. Resin numbers ending in "C" are comparative. The same copolymer was used for all five resins; the resins differed only in the chloromethylation and/or amination conditions.

| Resin | amino1) (eq/L) | quat(2) (eq/L) | water(3) (%) | UC(4) | area(5) ($m^2$/g) | pore diam(6) (nm) |
|---|---|---|---|---|---|---|
| R1C | 1.55 | 0.14 | 44 | < 1.1 | 41.2 | 29.2 |
| R2C | 1.67 | 0.03 | 45.7 | < 1.1 | 35.7 | 31.0 |
| R3 | 1.39 | 0.00 | 43.9 | < 1.1 | 34.1 | 30.9 |
| R4 | 1.35 | 0.01 | 42.5 | < 1.1 | 32.7 | 30.8 |
| R5 | 1.10 | 0.00 | 43.8 | < 1.1 | 34.5 | 40.1 |
| (1) to (6) same as above | | | | | | |

Testing Example 2: Decolorization and Regeneration

Decolorizing and Regeneration were performed as described above. The results were as follows:

| Resin | Decolorization: % Color Removal | Regeneration: Absorbance of effluent |
|---|---|---|
| DOWEX™ 66 | 52 | 0.42 |
| DOWEX™ MONOSPHERE™ 77 | 51 | 0.15 |
| Resin I | 56 | 0.34 |
| LEWATIT™ 4528 | 50 | 0.72 |
| R2C | 54 | 1.56 |
| R3 | 56 | 3.0 |
| R4 | 62 | 4.0 |
| R5 | 62 | 2.9 |

The decolorization of all the inventive resins was equal to or better than the decolorization of all the comparative samples. The regeneration of all the inventive resins was far superior to the regeneration of all the comparative resins.

Testing Example 3

Osmotic stability was tested. The results were as follows.

| Resin | Osmotic Stability (% whole beads) |
|---|---|
| DOWEX™ 66 | 48 |
| DOWEX™ MONOSPHERE™ 66 | 39 |
| DOWEX™ MONOSPHERE™ 77 | 70 |
| Resin I | 86 |
| AMBERLITE™ IRA96 | 77 |
| DIANON™ WA30 | 81 |
| LEWATIT™ 4528 | 95 |
| LEWATIT™ 4428 | 98 |
| R1C | 90 |
| R2C | 84 |
| R3 | 99 |
| R4 | 99 |
| R5 | 99 |

The inventive resins show superior osmotic stability to all of the comparative resins.

## Claims

**1.** A collection of resin particles,

wherein the resin particles comprise one or more vinyl aromatic polymers, and the total weight of polymerized units of all vinyl aromatic monomers is 90% or more by weight of the polymer;
wherein the polymer comprises methylene bridge groups between aromatic rings; wherein the polymer comprises amino groups and the total amount of amino groups bonded to the resin particles is 0.1 to 1.4 equivalents per liter of the collection of resin particles;
wherein quaternary ammonium groups bonded to the polymer are either absent or else are present in an amount

of 0.05 equivalents or less per liter of the collection of resin particles;
wherein the resin particles have water retention capacity of 40% to 50% by weight of water based on the weight of the collection of resin particles;
and wherein the resin particles have surface area of from 10 to 100 $m^2$/g, using the Brunauer-Emmett-Teller (BET) method using nitrogen gas.

**2.** The collection of resin particles of claim 1, wherein the collection of resin particles has a quotient expressed as uniformity coefficient UC D60/D10 of less than 1.1, wherein D60 is a diameter such that 60% by volume of the resin particles have diameter below D60, and 40% by volume of the resin particles have diameter of D60 or above, and D10 is a diameter such that 10% of the resin particles by volume have diameter below D10, and 90% of the resin particles by volume have diameter of D10 or above.

**3.** The collection of resin particles of claim 1, wherein the methylene bridge groups are present in an amount of 4% or less by weight of methylene bridge groups, based on the total dry weight of the resin particles.

## Patentansprüche

**1.** Sammlung von Harzpartikeln,

wobei die Harzpartikel einen oder mehrere aromatische Vinylpolymere umfassen, und das Gesamtgewicht von polymerisierten Einheiten aller aromatischen Vinylmonomere 90 Gew.-% oder mehr des Polymers beträgt;
wobei der Polymer Methylenbrückengruppen zwischen aromatischen Ringen umfasst;
wobei der Polymer Aminogruppen umfasst und die Gesamtmenge von an die Harzpartikel gebundene Aminogruppen 0,1 bis 1,4 Äquivalente pro Liter der Sammlung von Harzpartikeln beträgt;
wobei quaternäre Ammoniakgruppen, die an den Polymer gebunden sind, entweder fehlen oder ansonsten in einer Menge von 0,05 Äquivalenten oder weniger pro Liter der Sammlung von Harzpartikeln vorliegen;
wobei die Harzpartikel eine Wasserretentionskapazität von 40 Gew.-% bis 50 Gew.-% Wasser bezogen auf das Gewicht der Sammlung von Harzpartikeln aufweisen;
und wobei die Harzpartikel einen Oberflächenbereich von 10 bis 100 $m^2$/g, unter Verwendung der Brunauer-Emmett-Teller(BET)-Methode unter Verwendung von Stickstoffgas, aufweisen.

**2.** Sammlung von Harzpartikeln nach Anspruch 1, wobei die Sammlung von Harzpartikeln einen Quotienten aufweist, der als Ungleichförmigkeitszahl UC D60/D10 von weniger als 1,1 ausgedrückt wird, wobei D60 ein Durchmesser ist, sodass 60 Vol.-% der Harzpartikel einen Durchmesser kleiner als D60 aufweisen, und 40 Vol.-% der Harzpartikel einen Durchmesser von D60 oder größer aufweisen, und D10 ein Durchmesser ist, sodass 10 Vol.-% der Harzpartikel einen Durchmesser kleiner als D10 aufweisen, und 90 Vol.-% der Harzpartikel einen Durchmesser von D10 oder größer aufweisen.

**3.** Sammlung von Harzpartikeln nach Anspruch 1, wobei die Methylenbrückengruppen in einer Menge von 4 Gew.-% oder weniger von Methylenbrückengruppen vorliegen, bezogen auf das Gesamttrockengewicht der Harzpartikel.

## Revendications

**1.** Ensemble de particules de résine,

dans lequel les particules de résine comprennent un ou plusieurs polymères vinylaromatiques, et le poids total des unités polymérisées de tous les monomères vinylaromatiques est égal ou supérieur à 90 % en poids du polymère ;
dans lequel le polymère comprend des groupes de pontage méthylène entre des anneaux aromatiques ;
dans lequel le polymère comprend des groupes amino et la quantité totale de groupes amino liés aux particules de résine est de 0,1 à 1,4 équivalents par litre de l'ensemble de particules de résine ;
dans lequel des groupes d'ammoniums quaternaires liés au polymère sont soit absents, soit présents en une quantité inférieure ou égale à 0,05 équivalent par litre de l'ensemble de particules de résine ;
dans lequel les particules de résine ont une capacité de rétention d'eau de 40 % à 50 % en poids d'eau par rapport au poids de l'ensemble de particules de résine ;
et dans lequel les particules de résine ont une superficie comprise entre 10 et 100 $m^2$/g, en utilisant la méthode

Brunauer-Emmett-Teller (BET) en utilisant de l'azote gazeux.

**2.** Ensemble de particules de résine selon la revendication 1, dans lequel l'ensemble de particules de résine a un quotient exprimé comme coefficient d'uniformité UC D60/D10 inférieur à 1,1, dans lequel D60 est un diamètre tel que 60 % en volume des particules de résine ont un diamètre inférieur à D60, et 40 % en volume des particules de résine ont un diamètre de D60 ou plus, et D10 est un diamètre tel que 10 % des particules de résine en volume ont un diamètre inférieur à D10, et 90 % des particules de résine en volume ont un diamètre de D10 ou plus.

**3.** Ensemble de particules de résine selon la revendication 1, dans lequel les groupes de pontage méthylène sont présents en une quantité égale ou inférieure à 4 % en poids des groupes de pontage méthylène, sur la base du poids sec total des particules de résine.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6942805 B
- EP 0481603 A